# EUROPÄISCHE PATENTSCHRIFT

(11) **EP 0 571 645 B1**
(45) Veröffentlichungstag und Bekanntmachung des Hinweises auf die Patenterteilung: **20.09.1995**
(21) Anmeldenummer: 92108542.9
(22) Anmeldetag: 20.05.1992
(51) Int. Cl.: H02J 3/18, H02H 7/16

(54) **Verfahren und Vorrichtung zur Erkennung von Defekten in einem Ansteuersystem eines gesteuerten Serienkompensators**
Method and device for a recognition of defects in a control system for a controlled series compensator
Procédé et dispositif de reconnaissance de défauts dans un système de commande d'un compensation série commandé

(43) Veröffentlichungstag der Anmeldung: 01.12.1993
(73) Patentinhaber: SIEMENS AKTIENGESELLSCHAFT, 80333 München (DE)
(72) Erfinder: Leowald, Karl-Friedrich, Dipl.-Ing., W-8525 Weiher (DE); Weiss, Stephan. Dipl.-Ing., W-8525 Uttenreuth (DE)

(56) Entgegenhaltungen:
- WO-A-87/04538
- US-A- 4 999 565
- ELEKTRIE Bd. 45, Nr. 3, März 1991, BERLIN, DE Seiten 88 - 90 G. THUMM 'Geregelte Parallel und Reihenkompensation'
- IEEE TRANSACTIONS ON POWER DELIVERY Bd. 4, Nr. 1, Januar 1991, NEW YORK US Seiten 241 - 247 N. SADANANDAN ET AL 'Microprocessor-based Capacitor Bank Control and Protection System'

## Beschreibung

### Verfahren und Vorrichtung zur Erkennung von Defekten in einem Ansteuersystem eines gesteuerten Serienkompensators

Die Erfindung bezieht sich auf ein Verfahren und eine Vorrichtung zur Erkennung von Defekten in einem Ansteuersystem eines gesteuerten Serienkompensators, der einen Serienkondensator, der in eine Übertragungsleitung integriert ist, und dazu einen Parallelzweig, bestehend aus einer Spule und einem Stromrichterventil, aufweist.

Bei der Reihenkompensation werden üblicherweise Kondensatoren im Leitungszug eingesetzt, um den stromabhängigen Spannungsabfall auf der Leitung und den Übertragungswinkel in Stufen zu vermindern. Es handelt sich dabei um Kondensatorbänke, die als Ganzes oder in mehreren Teilkondensatoren (Segmenten) in Reihe zu- und abgeschaltet werden. Das Zu- und Abschalten des Kondensators geschieht dadurch, daß ein paralleler Leistungsschalter geöffnet bzw. geschlossen wird. Der Schutz des Kondensators bei Netzkurzschluß wird durch einen parallelen Ableiter, durch eine triggerbare Funkenstrecke und/oder durch den parallelen Leistungsschalter gewährleistet.

Des weiteren ist eine Reihenkompensationsanlage bekannt, bei der durch eine zum Kondensator parallel geschaltete Drossel die Gesamtimpedanz dieses Reihenkompensators (ähnlich wie beim TCR (Thyristor Controlled Reactor) im statischen Kompensator) mit einem Stromrichterventil auf Hochspannungspotential stufenlos geregelt wird durch entsprechendes Zünden. Ein derartiger gesteuerter Serienkompensator ist bekannt unter dem Begriff ASC (Advanced Series Compensation). Mit einem derartigen gesteuerten Serienkompensator kann die Dynamik der Reihenkompensation verbessert werden und die Gesamtimpedanz ist in einem gewissen Bereich regelbar, wobei die Impedanz von kapazitiv bis induktiv verändert werden kann.

Derartige Reihenkompensatoren sind im Aufsatz "Geregelte Parallel- und Reihenkompensation", abgedruckt in der DE-Zeitschrift "Elektrie", Band 45, 1991, März, Seiten 88 bis 90, vorgestellt. Außerdem ist ein derartiger gesteuerter Reihenkompensator, der in eine Übertragungsleitung integriert ist, in der internationalen Patentschrift WO 87/04538 beschrieben.

Das Verstellen der Impedanz des Serienkompensators erfolgt durch Beeinflussung des Zündwinkels des Stromrichterventils, das mit einer Spule elektrisch parallel zum Serienkondensator des Serienkompensators geschaltet ist. Das Stromrichterventil besteht aus zwei antiparallel geschalteten Ventilen, die jeweils aus mehreren in Reihe geschalteten Ventilen auf gebaut sind. Die einzustellende Impedanz wird durch übergeordnete Regelungen (Leitungsstrom-Regelung, Verbraucherspannungs-Regelung, Pendelpämpfung) vorgegeben. Bei einer Anordnung des Serienkompensators in einem Drehspannungssystem ist die einzustellende Impedanz in den drei Phasen gleich groß. Der Zündwinkel α, der sich auf die Wechselkomponente der Kondensatorspannung bezieht, steht in einem nichtlinearen Zusammenhang mit der Impedanz.

Bei Defekten im Ansteuersystem der Ventile können die Impedanz des gesteuerten Serienkompensators ungleich dem von einer Regelung oder einer Steuerung geforderten Sollimpedanz sein. Aus diesem Zustand des gesteuerten Serienkompensators resultieren Nachteile für das Netz (Unsymmetrie, ungleiche Belastung der Leitungen, unterschiedlicher Kompensationsgrad). Die Vorteile des gesteuerten Serienkompensators können verlorengehen bzw. sie können sich in Nachteile umkehren.

Daher muß dieser Fehlerzustand des gesteuerten Serienkompensators von diesem selbst erfaßt werden, da im Netz mit vorhandenen Einrichtungen nur verzögert oder gar nicht dieser Fehlerzustand erkannt werden kann. Dies erfordert eine Selbstüberwachung für den gesteuerten Serienkompensator.

Defekte im Ansteuersystem haben häufig verändertes Zündverhalten des Stromrichterventils zur Folge, d.h. das Stromrichterventil schaltet verzögert oder gar nicht ein. Ein Sonderfall unter den möglichen Defekten ist der Ausfall der Ventilelektronik an einem einzelnen Ventilplatz. Das Ventil kann dann nur durch Ansprechen der als Überspannungsschutz dienenden Überspannungsschutzdiode, auch Break-Over-Diode (BOD) genannt, eingeschaltet werden. Die Ansprechspannung einer Überspannungsschutzdiode ist nur geringfügig kleiner als die maximale positive Sperrspannung des zugehörigen Ventils. Abhängig von der Höhe der Kondensatorspannung des Serienkondensators des gesteuerten Serienkompensators und vom Zündwinkel α wird die Ansprechspannung der Überspannungsschutzdiode erreicht und das Ventil schaltet mit Verzögerung ein. Wird bei anderen Betriebspunkten die Ansprechspannung der Überspannungsschutzdiode nicht erreicht, kommt es zu einem Zündaussetzer, wodurch der gesteuerte Serienkompensator nur noch über einen eingeschränkten Steuerbereich verfügt.

Von dem genannten Fall abgesehen, haben alle Defekte des Ansteuersystems ein Aussetzen der Ventilzündung zur Folge.

Fehler im Regel- und Ansteuersystem müssen durch Einrichtungen des gesteuerten Serienkompensators erfaßt und dieser daraufhin in einen solchen Zustand gebracht werden, daß Nachteile für den Netzbetrieb vermieden werden.

Der Erfindung liegt nun die Aufgabe zugrunde, ein Verfahren und eine Vorrichtung anzugeben, wodurch Defekte in einem Ansteuersystem eines gesteuerten Serienkompensators erkannt werden und der gesteuerte Serienkompensator daraufhin in einen solchen Zustand gebracht wird, daß Nachteile für den Netzbetrieb vermieden werden.

Diese Aufgabe wird erfindungsgemäß gelöst durch die Verfahrensschritte des Anspruchs 1 und durch die kennzeichnenden Merkmale des Anspruchs 3.

Defekte im Ansteuersystem eines gesteuerten Serienkompensators treten zufällig, d.h., unabhängig von der Betriebart - stationärer Betrieb, TCR-Betrieb (Thyristor Controlled Reactor), TSR-Betrieb (Thyristor Switched Reactor) - auf. Um solche Defekte im Ansteuersystem des gesteuerten Serienkompensators zu erkennen, bietet sich ein Impedanzvergleich des Serienkompensators an. Bei ordnungsgemäßem Arbeiten des gesteuerten Serienkompensators kann angenommen werden, daß im stationären Betrieb die aktuell wirksame Impedanz mit einer vorgegebenen Sollimpedanz übereinstimmt. Die aktuell wirksame Impedanz kann aus verfügbaren Meßwerten (Leitungsstrom, Kondensatorspannung) berechnet werden. Der gebildete Impedanz-Differenzwert kann entweder über eine angemessene Zeitspanne beobachtet und/oder mit einem Grenzwert verglichen werden. Wenn nun der Impedanz-Differenzwert über diese Zeitspanne ansteht und/oder den Grenzwert überschreitet, muß in das Ansteuersystem eingegriffen werden, da ein Defekt vorliegt.

Die Art des Eingriffs ist vom Pegel des gemessenen Leitungsstroms abhängig. Ist der Leitungsstrom kleiner als ein Grenzwert, wird in allen Zweigen die Zündung gesperrt, da die Spannung am Serienkondensator infolge eines derartig kleinen Leitungsstroms die Ansprechspannung des Überspannungsschutzes nie erreichen würde. Ist der Leitungsstrom größer als ein Grenzwert, wird in allen Zweigen der Zündwinkel auf einen vom Pegel des gemessenen Leitungsstroms abhängigen Wert derart begrenzt, daß ein Einschalten des Ventils durch Schutzzündung erfolgen kann. Erfolgt das Einschalten des Ventils über Schutzzündung, wird dies der Fußpunktelektronik des Ansteuersystems gemeldet. In diesem Fall ist ein stabiler TCR-Betrieb mit eingeschränktem Steuerbereich möglich. Schaltet das Ventil trotz ausreichend großem Leitungsstrom nicht ein, d.h. es gibt weder eine Meldung der Schutzzündung noch eine Verkleinerung der Impedanzdifferenz, so wird in allen Zweigen die Zündung gesperrt.

Durch die Auswertung und den Vergleich von Netzgrößen mit Referenzgrößen greift das erfindungsgemäße Verfahren steuernd auf die Stellgröße (Impedanz bzw. Zündwinkel) des gesteuerten Serienkompensators ein. Dieses Verfahren erkennt neben Ventilstörungen durch die Auswertung von Netzgrößen und Stellgrößen auch unsymmetrische Ansteuerungen einer gesteuerten Serienkompensationsanlage in einem dreiphasigen Netz. Dieses Verfahren erhöht die Verfügbarkeit der Anlage, sowie die Qualität der Kompensation durch symmetrischen Betrieb.

Andere Möglichkeiten zur Überwachung der Ventilzündung (z.B. Vergleich Zündimpuls mit nachfolgendem Stromfluß im Ventil oder Auswertung der Rückmeldung erfolgter Schutzzündung) liefern je nach Betriebspunkt des gesteuerten Serienkompensators gar keine oder nur eine unsichere Aussage.

Bei einem weiteren Verfahren wird ein Zündwinkelsignal generiert, sobald die gemessene Kondensatorspannung einen Gleichspannungsanteil aufweist und der Wert des gemessenen Ventilstroms des gesteuerten Serienkompensators kleiner gleich einem unteren Grenzwert ist, wobei der Wert des Zündsignals vom Pegel des Leitungsstroms derart abhängig ist, daß eine Schutzzündung erfolgen kann. Der Ausfall eines Ventils führt im Serienkondensator des gesteuerten Serienkompensators zu einem Gleichspannungsanteil, der in der gemessenen Kondensatorspannung erkannt werden kann. Außerdem fällt bei Ausfall des Stromrichterventils der Ventilstrom unter einen unteren Grenzwert bzw. ist gleich Null. Somit dient dieses Verfahren zur Erkennung von Ventilausfällen, welche nicht durch eine Ventilelektronik erkannt werden können. Auch hier werden Netzgrößen ausgewertet und mit Referenzgrößen verglichen, d.h. Fehler im Regel- und Ansteuersystem werden durch Einrichtungen des gesteuerten Serienkompensators erfaßt und dieser daraufhin in einen solchen Zustand gebracht, daß Nachteile für den Netzbetrieb vermieden werden.

Bei einer besonders vorteilhaften Ausführungsform der Vorrichtung zur Durchführung des Verfahrens zur Erkennung von Defekten in einem Ansteuersystem eines gesteuerten Serienkompensators ist als Vorrichtung ein Mikrocomputer vorgesehen. Da als Steuer- und Regeleinrichtung eines gesteuerten Serienkompensators vorzugsweise ein Rechnersystem vorgesehen ist, besteht die Vorrichtung in der Programmierung eines Programms zur Erkennung von Defekten in einem Ansteuersystem. Weitere Ausgestaltungen der Vorrichtung sind den Unteransprüchen 5 bis 9 zu entnehmen.

Zur weiteren Erläuterung des erfindungsgemäßen Verfahrens und der erfindungsgemäßen Vorrichtung zur Erkennung von Defekten in einem Ansteuersystem eines gesteuerten Serienkompensators wird auf die Zeichnung Bezug genommen, in der Ausführungsbeispiele einer erfindungsgemäßen Vorrichtung schematisch veranschaulicht sind.
- Figur 1: zeigt einen gesteuerten Serienkompensator mit einer Vorrichtung zur Erkennung von Defekten in seinem Ansteuersystem, in
- Figur 2: ist der nähere Aufbau der Vorrichtung zur Erkennung von Defekten nach Figur 1 als Blockschaltbild dargestellt und in
- Figur 3: ist ein Blockschaltbild einer vorteilhaften Ausführungsform der Vorrichtung nach Figur 1 näher dargestellt.

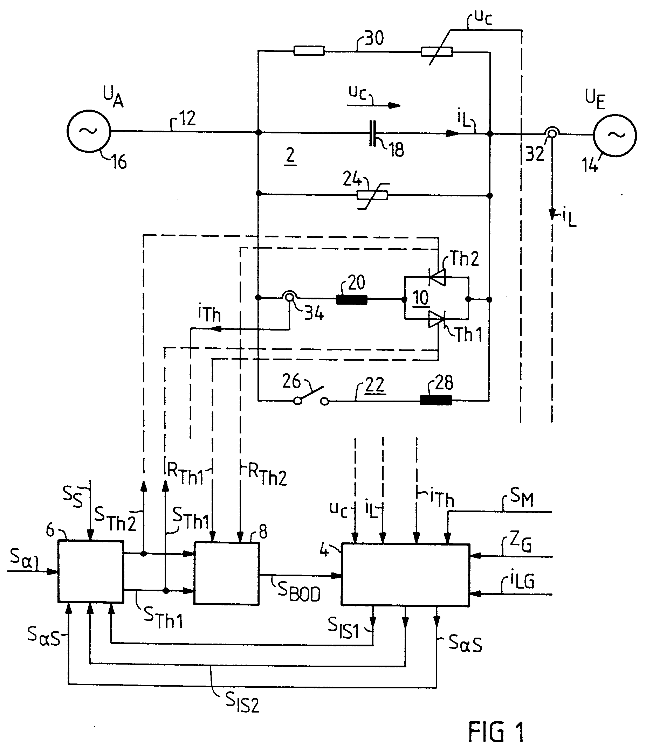

Die Figur 1 zeigt ein Ersatzschaltbild eines gesteuerten Serienkompensators 2 mit einer Vorrichtung 4 zur Erkennung von Defekten in einem Ansteuersystem des gesteuerten Serienkompensators 2, wobei von diesem Ansteuersystem nur ein Steuersatz 6 und eine Fußpunktelektronik 8 dargestellt ist. Der Steuersatz 6, der für eine zeitsynchrone Ansteuerung eines Stromrichterventils 10 des gesteuerten Serienkompensators 2 sorgt, ist ausgangsseitig mit der Fußpunktelektronik 8 verbunden, die ausgangsseitig mit der Vorrichtung 4 elektrisch leitend verbunden ist. Dieser Steuersatz 6 setzt Zündsignale S_{Th1} und S_{Th2} für die Ventile Th1 und Th2 des Stromrichterventils 10 ab, die aus einem Synchronisiersignal S_{S} und einem Zündwinkelsignal S_{α}, das einem gewünschten Zündwinkel α entspricht, erzeugt werden. Der gesteuerte Serienkompensator 2, der auch als ASC (Advanced Serien Compensation) bekannt ist, ist als Reihenwiderstand in einer Übertragungsleitung 12 eingeschaltet. Dies geschieht in den meisten Fällen im Zuge der Leitung 12, erfolgt aber auch am Ausgang bzw. Eingang von Schaltstationen. Am Leitungsanfang und am Leitungsende sind jeweils Spannungsquellen 14 und 16 angegeben, deren Spannungen U_{E} und U_{A} sich in der Ampltide um einen Leitungsspannungsabfall ΔU unterscheiden und in einem Spannungsverdrehwinkel ϑ phasenverschoben sind. Die Spannung U_{A} am Leitungsanfang wird auch als sendende Spannung U_{A} und die Spannung U_{E} am Leitungsende wird auch als Verbraucherspannung U_{E} bezeichnet.

Der Aufbau einer gesteuerten Serienkompensationsanlage 2 kann in drei Bereiche unterteilt werden. Der Kern einer solchen Anlage 2 besteht aus einem Serienkondensator 18, welcher in der Übertragungsleitung 12 seriell integriert ist. Hiermit erreicht man eine Kompensation der induktiven Längsimpedanz der Leitung 12, welche für den induktiven Blindleistungsanteil verantwortlich ist. Parallel wird bei einer gesteuerten Serienkompensationsanlage 2 ein Zweig, bestehend aus einer Spule 20 und einem Stromrichterventil 10, hinzugeschaltet. Als Stromrichterventil 10 ist eine Parallelschaltung zweier Thyristorventile Th1 und Th2 dargestellt, die antiparallel zueinander angeordnet sind. Mittels dieser beiden Thyristorventile Th1 und Th2 kann die Spule 20 zu vorbestimmten Zeitpunkten für die positive und negative Halbwelle der Kondensatorspannung u_{C} eingeschaltet werden. Anstelle der Thyristorventile Th1 und Th2 können auch andere Halbleiterventile, beispielsweise GTO-Thyristoren (Gate-turn-off-Thyristoren), verwendet werden. Der Aufbau eines Thyristorventils für Blindstromkompensation ist im Aufsatz "Stromrichter für statische Blindstromkompensation" abgedruckt in der DE-Zeitschrift "Siemens-Energietechnik", Band 3 (1981), Heft 11 bis 12, Seiten 353 bis 357. Mittels des Zweiges besteht die Möglichkeit, durch eine Phasenanschnittsteuerung die wirksame Impedanz des gesteuerten Serienkompensators 2 kontinuierlich kapazitiv und induktiv zu verändern. Dadurch kann man neben der Erhöhung der übertragungsleistung auch noch im Fehlerfall auf der Leitung 12 einen Kurzschlußstrom begrenzen. Die aufgezählten Vorteile beim Einsatz von Reihenkondensatoren, die im Lehrbuch "Reihenkondensatoren in elektrischen Netzen", von Dr.-Ing. Leonhard Müller, 1967, Seite 4, gelten auch für einen gesteuerten Serienkompensator 2.

Zum Schutz des Serienkondensators 18, der Spule 20 und des Stromrichterventils 10 vor Überlastungen durch zu hohe Leitungsströme i_{L} sind parallel zu diesen Elementen 18 oder 20 und 10 ein Nebenweg 22 (Bypass) und ein nichtlinearer Widerstand 24, auch Ableiter genannt, eingebaut. Als nichtlinearer Widerstand 24 ist beispielsweise ein Metalloxid-Varistor (MOV) vorgesehen. Dieser elektrisch parallel zum Serienkondensator 24 geschaltete Metalloxid-Varistor 24 ist so dimensioniert, daß bei einer vorbestimmten Spannungsamplitude dieser Ableiter 24 sehr schnell die Stromführung übernimmt und somit den Serienkondensator 18 vor länger andauernden Überlastzuständen schützt. Das Energieaufnahmevermögen eines nichtlinearen Widerstandes 24 ist aufgrund wirtschaftlicher Überlegungen natürlich begrenzt und somit benötigt eine Serienkompensationsanlage 2 auch die Möglichkeit, den Serienkondensator 18 mit seinem Ableiter 24 vor Überlastungen zu schützen. Diese Aufgabe wird von dem parallelen Nebenweg 22 übernommen. Dieser Bypass 22 besteht aus einem Bypass-Schalter 26 und aus einem Dämpfungskreis 28. Anstelle des Bypass-Schalters 26 kann auch eine triggerbare Funkenstrecke oder eine Kombination aus beiden vorgesehen sein. Der Bypass-Schalter 26 wird geschlossen, sobald die Belastung, d.h. das Energieaufnahmevermögen des Ableiters 24, erschöpft ist.

Ebenfalls elektrisch parallel zum Serienkondensator ist ein Spannungsteiler 30 vorgesehen, an dessen Ausgang die Kondensatorspannung u_{C} ansteht.

Mittels einer Einrichtung 32 wird der Istwert des Leitungsstromes i_{L} in der Übertragungsleitung 12 gemessen, wogegen mittels einer Einrichtung 34 der Istwert des Stromes i_{Th} durch die Spule 20 und durch das Stromrichterventil 10 gemessen wird. Diese Systemgrößen i_{L} und u_{C} und i_{Th} werden über ein Lichtleitersystem potentialfrei von der auf Hochpotential befindlichen Anlage 2 zur Vorrichtung 4 zur Erkennung von Defekten in einem Ansteuersystem dieser Anlage 2 geführt, die auf Erdpotential ist. Diese potentialfreie Übertragung der Systemgrößen i_{L}, u_{C} und i_{Th} ist durch eine unterbrochene Linie dargestellt.

Der Vorrichtung 4 zur Erkennung von Defekten werden außerdem ein Mode-Signal S_{M}, ein Impedanz-Grenzwert Z_{G} und ein Leitungsstrom-Grenzwert i_{LG} zugeführt. Die Ausgänge der Vorrichtung 4 sind mit dem Steuersatz 6 verbunden.

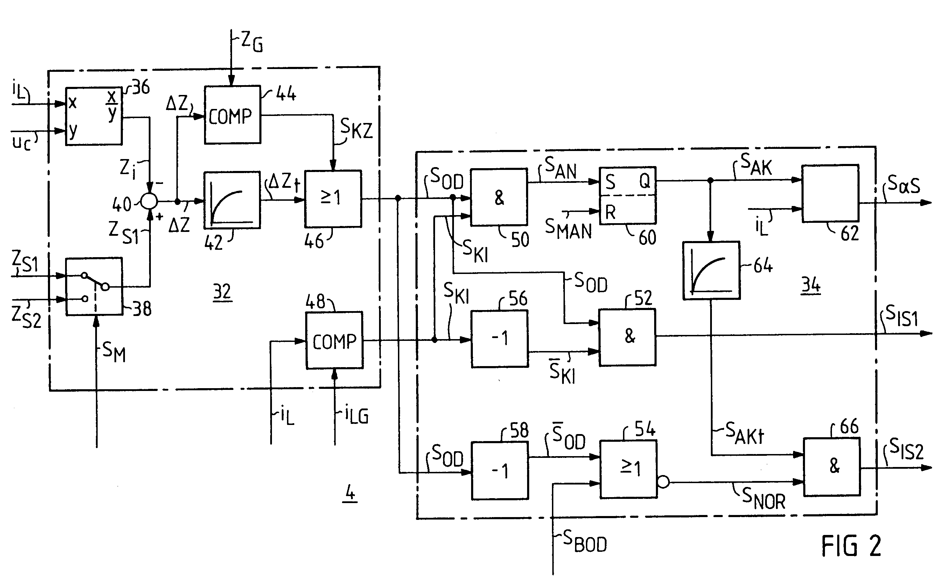

Die Figur 2 zeigt ein Blockschaltbild der Vorrichtung 4 nach Figur 1. Diese Vorrichtung 4 besteht eingangsseitig aus einer Signalaufbereitungseinrichtung 32 und ausgangseitig aus einer Signalverarbeitungseinrichtung 34, die der Signalaufbereitungseinrichtung 32 nachgeschaltet ist. In einer vorteilhaften Ausführungsform der Vorrichtung 4 ist als Vorrichtung 4 ein Mikrocomputer vorgesehen.

Die Signalaufbereitungseinrichtung 32 weist eingangsseitig eine Schaltung 36 zur Berechnung der wirksamen aktuellen Impedanz Zᵢ aus der gemessenen Kondensatorspannung u_{C} und dem gemessenen Leitungsstrom i_{L} und einem Umschalter 38 auf, an deren Eingängen die Sollimpedanzen Z_{S1} und Z_{S2} anstehen und an dessem Steuereingang das Mode-Signal S_{M} ansteht. Die Ausgänge der Recheneinheit 36 und des Umschalters 38 sind über einen Vergleicher 40 mit einer Beobachtungsstufe 42 und/oder mit einem ersten Kommparator 44 verknüpft. Dabei ist der Ausgang der Recheneinheit 36 mit dem negativen Eingang des Vergleichers 40 und der Ausgang des Umschalters 38 mit dem positiven Eingang des Vergleichers 40 elektrisch leitend verbunden. An einem zweiten Eingang des ersten Komparators 44 steht ein Impedanz-Grenzwert Z_{G} an. Ausgangsseitig ist dieser Komparator 44 mit einem ersten Eingang eines ODER-Gatters 46 verbunden, wobei sein zweiter Eingang mit dem Ausgang der Beobachtungsstufe 42, die beispielsweise ein Proportionalregler erster Ordnung (PT₁-Regler) sein kann, verknüpft ist.

Außerdem weist die Signalaufbereitungseinrichtung 32 eingangsseitig einen zweiten Komparator 48 auf, an dessen einem Eingang der gemessene Leitungsstrom i_{L} und an dessen anderem Eingang ein Leitungsstrom-Grenzwert i_{LG} anstehen. Der Ausgang des ODER-Gatters 46 und der Ausgang des zweiten Komparators 48 bilden die Ausgänge der Signalaufbereitungseinrichtung 36.

Die Signalverarbeitungseinrichtung 34 weist eingangsseitig ein erstes und zweites UND-Gatter 50 und 52 und ein NOR-Gatter 54 auf. Der erste Eingang des ersten UND-Gatters 50 ist mit dem ersten Eingang des zweiten UND-Gatters 52 elektrisch leitend verbunden, wobei der zweite des ersten UND-Gatters 50 mittels eines Inverters 56 mit dem zweiten Eingang des zweiten UND-Gatters 52 verknüpft ist. Außerdem ist der erste Eingang des ersten UND-Gatters 50 über einen weiteren Inverter 58 mit einem ersten Eingang des NOR-Gatters 54 verbunden. Der zweite Eingang dieses NOR-Gatters 54 ist mit dem Ausgang der Fußpunktelektronik 8 nach Figur 1 elektrisch leitend verbunden. Der Ausgang des ersten UND-Gatters 52 ist mit dem Set-Eingang S eines RS-Flip-Flops 60 verbunden, dessen Ausgang Q mit einem ersten Eingang eines Kennliniengebers 62 verknüpft ist, an dessem zweiten Eingang der gemessene Leitungsstrom i_{L} ansteht. Am Reset-Eingang R dieses RS-Flip-Flops 60 steht ein Manuell-Signal S_{MAN} an. Der Ausgang Q des RS-Flip-Flops 60 ist über eine weitere Beobachtungsstufe 64 mit einem dritten UND-Gatter 66 verbunden, wobei der zweite Eingang dieses dritten UND-Gatters 66 mit dem Ausgang des NOR-Gatter 54 verbunden ist. Als weitere Beobachtungsstufe 64 kann ebenfalls ein Proportional-Regler erster Ordnung (PT₁-Regler) vorgesehen sein, dessen Verzögerungszeit auf eine vorgebbare Beobachtungszeit einstellbar ist. Die Ausgänge des Kennliniengebers 62, des zweiten und dritten UND-Gatters 52 und 66 bilden die Ausgänge der Signalverarbeitungseinrichtung 34.

Als Signalaufbereitungseinrichtung 32 und als Signalverarbeitungseinrichtung 34 können jeweils ein Signalprozessor oder für beide zusammen ein Mikrocomputer vorgesehen sein. Die Signalverarbeitungseinrichtung 34 kann auch mit anderen Logikbausteinen aufgebaut werden.

Anhand dieses Blockschaltbilds der Vorrichtung 4 zur Erkennung von Defekten in einem Ansteuersystem eines gesteuerten Serienkompensators 2 wird nun im folgenden die Arbeitsweise dieser Vorrichtung 4 näher erläutert:

Wie schon eingangs genannt kann ordnungsgemäßes Arbeiten des gesteuerten Serienkompensators 2 angenommen werden, wenn seine im stationären Betrieb gemessene Impedanz Zᵢ mit einer vorgegebenen Sollimpedanz Z_{S1} bzw. Z_{S2} übereinstimmt. Die aktuell wirksame Impedanz Zᵢ wird aus der gemessenen Kondensatorspannung u_{C} und des gemessenen Leitungsstromes i_{L} des gesteuerten Serienkompensators 2 mittels der Recheneinheit 36 berechnet. In Abhängigkeit des Mode-Signals S_{M} gibt der Umschalter 38 die Sollimpedanz Z_{S1} oder Z_{S2}, die an seinen Eingängen anstehen, an seinen Ausgang weiter.

Als Betriebsarten des gesteuerten Serienkompensators 2 gibt es neben dem Ruhezustand noch die laufenden Betriebsarten TCR-Betrieb (Thyristor Controlled Reactor) und TSR-Betrieb (Thyristor Switched Reactor). Im TCR-Betrieb wird das Stromrichterventil 10 periodisch gezündet, wobei der Zündwinkel α variabel ist. Im TSR-Betrieb wird das Stromrichterventil 10 dauergezündet. Im TSR-Betrieb ist die Sollimpedanz Z_{S2} fest und entspricht der Impedanz der Parallelschaltung des Serienkondensators 18 und der Spule 20 des gesteuerten Serienkompensators 2, die sehr viel kleiner ist als die Impedanz des Serienkondensators 18. Im TCR-Betrieb treten im nichtstationären Zustand auch bei fehlerfreiem Ansteuersystem Impedanzdifferenzen ΔZ=Z_{S1}-Zᵢ auf, weswegen die Impedanzdifferenz ΔZ, die mittels des Vergleichers 40 ermittelt wird, über eine angemessene Zeitspanne hinweg beobachtet werden muß, ehe daraus ein weitergehender Eingriff abgeleitet wird. Als Beobachtungsstufe 42 kann ein PT₁-Regler vorgesehen sein, dessen Zeitverzögerung auf die angemessene Zeitspanne eingestellt ist. Steht eine Impedanzdifferenz ΔZ länger als die angemessene Zeitspanne an, so erscheint am Ausgang der Beobachtungsstufe 42 ein Signal ΔZₜ, das der Impedanzdifferenz ΔZ entspricht. Die Impedanzdifferenz ΔZ kann gleichzeitig mittels des Komparators 44 mit einem einstellbaren Impedanz-Grenzwert Z_{G} verglichen werden. Am Ausgang des Komparators steht ein Ausgangssignal S_{KZ} an.

Hat die Impedanzdifferenz ΔZ den Impedanz-Grenzwert Z_{G} überschritten oder steht diese Impedanzdifferenz ΔZ über die angemessene Zeitspanne an, daß dies für das Netz nicht mehr akzeptabel ist, wechselt am Ausgang des ODER-Gatters 46 das Ausgangssignal S_{OD} vom low-Pegel zum high-Pegel. Dies bedeutet, daß nun eingegriffen werden muß. Die Art des Eingriffs ist vom Pegel des Leitungsstromes i_{L} abhängig. Mittels des Komparators 48 wird festgestellt, ob der Leitungsstrom i_{L} größer oder kleiner eines einstellbaren Leitungsstrom-Grenzwertes i_{LG} ist. Am Ausgang des Komparators 48 steht ein Komparatorsignal S_{KI} an, das einen high-Pegel aufweist, wenn gilt: i_{L}> i_{LG}, und das einen low-Pegel aufweist, wenn gilt: i_{L}< i_{LG}. Diese Signale S_{OD} und S_{KI} der Signalaufbereitungseinrichtung 32 werden der Signalverarbeitungseinrichtung 34 als Eingangssignale zugeführt, wobei außerdem diese Einrichtung 34 der gemessene Leitungsstrom i_{L} und ein Schutzzündsignal S_{BOD} der Fußpunktelektronik 8 als Eingangssignal zugeführt werden.

### TCR-Betrieb:

Ist der Pegel des Leitungsstroms i_{L} kleiner als der Grenzwert i_{LG} bei Erkennung eines Defektes im Ansteuersystem des gesteuerten Serienkompensators 2, so ist der Pegel des Ausgangssignals S_{AN} des ersten UND-Gatters 50 low und der Pegel des Ausgangssignals S_{IS1}′ auch erstes Zündsperrsignal genannt, des zweiten UND-Gatters 52 high, wodurch in allen Zweigen die Zündung gesperrt wird.

Ist der Pegel des Leitungsstromes i_{L} größer als der Grenzwert i_{LG} bei Auftreten eines Defektes im Ansteuerungssystem, so geht das Ausgangssignal S_{AN} des ersten UND-Gatters 50 auf high-Pegel, wodurch das Ausgangssignal S_{AK} des RS-Flip-Flops 60 ebenfalls auf high-Pegel springt, wodurch im Kennliniengeber 62 in Abhängigkeit des gemessenen Leitungsstromes i_{L} derart ein Zündwinkelsignal S_{αS} bestimmt wird, das infolge des großen Leitungsstromes i_{L} die Ventilspannung des Stromrichterventils 10 auf die Ansprechspannung der Schutzzündvorrichtung hochläuft. Wird das Stromrichterventil 10 mittels Schutzzündung gezündet, so wird das mittels der Rückmeldesignale R_{Th1} und R_{Th2} der Fußpunktelektronik 8 gemeldet, die darauf der Vorrichtung 4 ein Schutzzündsignal S_{BOD} zuführt. In diesem Fehlerfall (Fehler in einem Thyristorplatz) zündet das Stromrichterventil 10 periodisch über die Überspannungsdiode (BOD), so daß ein stabiler TCR-Betrieb mit eingeschränktem Steuerbereich möglich ist. Der Zündwinkel α in diesem Fehlerfall ist kleiner als 180° el. und die Impedanz Zᵢ des gesteuerten Serienkompensators 2 ist größer als die Impedanz Z_{C} des Serienkondensators 18, wobei für die Impedanz Zᵢ des gesteuerten Serienkompensators 2 gilt: Z_{C}<Zᵢ<Z₁. Die Impedanz Zᵢ ist stets deutlich größer als die Impedanz Z_{C} des Serienkondensators 18, jedoch kein fester Wert, sondern sowohl vom Zündwinkel α und dem Leitungsstrom i_{L} als auch von der bei Eintreten des Fehlers eingestellten Betriebsart (TCR-Betrieb mit α < 180° el. bzw. Ruhezustand α = 180° el.) abhängig. Die Impedanz Zᵢ zwischen der Kondensatorimpedanz Z_{C} und der Impedanz Z₁ ist nicht einstellbar, woraus sich eine unstetige Arbeitskennlinie ergibt. Da periodisches Schutzzünden in der Fußpunktelektronik 8 erkannt und gemeldet wird, ist dieser Fehlerfall eindeutig identifiziert.

Schaltet das Stromrichterventil 10 trotz ausreichend großem Leitungsstrom i_{L} nicht ein, d.h. es gibt weder ein Schutzzündsignal S_{BOD} noch eine Verkleinerung der Impedanzdifferenz ΔZ (Ausgangssignal S_{OD} müßte von high-Pegel auf low-Pegel wechseln). Dadurch wechselt das Ausgangssignal S_{NOR} des NOR-Gatters 54 vom low-Pegel auf high-Pegel und das Ausgangssignal S_{IS2}, auch zweites Zündsperrsignal genannt, des dritten UND-Gatters 66 wechselt vom low-Pegel zum high-Pegel, da über eine angemessene Zeitspanne das Ausgangssignal S_{AK} des RS-Flip-Flops 60 auf high-Pegel stand. Mittels dieses zweiten Zündsperrsignals S_{IS2} werden in allen Zweigen die Zündung gesperrt.

### TSR-Betrieb:

Im TSR-Betrieb ist die Sollimpedanz Z_{S2} des gesteuerten Serienkondensators 2 konstant und entspricht der Impedanz Z_{L} der Spule 20 des Serienkondensators 2. Der Betrag dieser Spulenimpedanz Z_{L} ist immer erheblich kleiner als der der Kondensatorimpedanz Z_{C}. Ist die Impedanzdifferenz ΔZ sicher erkannt worden, d.h., das Ausgangssignal S_{OD} des ODER-Gatters 46 hat vom low-Pegel auf high-Pegel gewechselt, so kann mit Rücksicht auf die Impedanz-Symmetrie der Anlage 2 bei Leitungsströmen i_{L}<i_{LG} in allen Zweigen die Zündung gesperrt werden (erstes Zündsperrsignal S_{IS1} wechselt vom low-Pegel auf high-Pegel). Ist der Leitungsstrom i_{L}>i_{LG}, so wird mittels der Ausgangssignale S_{AN} und S_{AK} ein Zündwinkelsignal S_{αS} derart generiert, daß die Ventilspannung des Stromrichterventils 10 auf die Ansprechspannung der Überspannungsdiode hochläuft. Erfolgt nun das Einschalten des Stromrichterventils 10 über die Schutzzündung, so wird dies von der Fußpunktelektronik 8 erfaßt und der Vorrichtung 4 mittels des Schutzzündsignals S_{BOD}, das vom low-Pegel auf high-Pegel wechselt, mitgeteilt. Kommt es trotz ausreichend großem Leitungsstrom i_{L} nicht zur periodischen Schutzzündung, so bleibt das Schutzzündsignal S_{BOD} auf low-Pegel, wodurch mittels der Ausgangssignale S_{NOR} und S_{AKt} das zweite Zündsperrsignal S_{IS2} vom low-Pegel auf high-Pegel wechselt, wodurch in allen Zweigen der Anlage 2 die Zündung gesperrt wird.

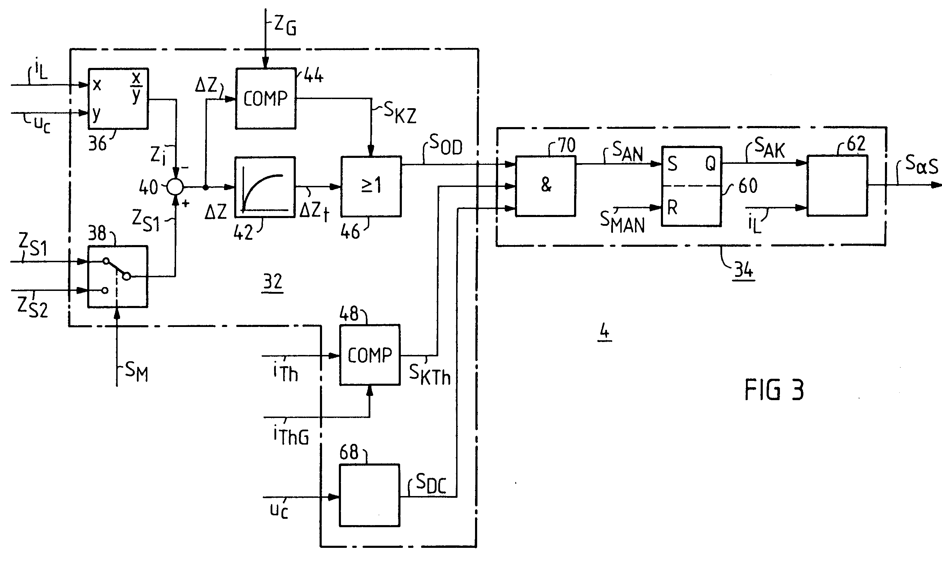

In der Figur 3 ist ein weiteres Blockschaltbild der Vorrichtung 4 näher dargestellt. Gegenüber dem Blockschaltbild der Vorrichtung 4 nach Figur 2 unterscheidet sich diese Vorrichtung 4 einerseits darin, daß die Signalaufbereitungseinrichtung 32 eine Einrichtung 68 zur Feststellung eines Gleichspannungsanteils der Kondensatorspannung u_{C} der Anlage 2 hat und der Komparator 48 nun den Ventilstrom i_{Th} mit einem Grenzwert i_{ThG}, der sehr klein bzw. Null ist, vergleicht. Andererseits weist die Signalverarbeitungseinrichtung 34 eingangsseitig ein UND-Gatter 70 mit drei Eingängen auf, dem das RS-Flip-Flop 60 mit nachgeschaltetem Kennliniengeber 62 nachgeschaltet ist.

Ist das Ausgangssignal S_{OD} des ODER-Gatters 46, das Komparatorsignal S_{KTh} und das Ausgangssignal S_{DC} der Einrichtung 68 auf high-Pegel, so liegt ein Fehler im Ansteuersystem vor, weil die Impedanzdifferenz ΔZ entweder lange genug anstand oder größer als ein Grenzwert Z_{G} ist, kein Strom i_{Th} durch das Stromrichterventil 10 fließt und die Kondensatorspannung u_{C} infolge eines Defektes des Stromrichterventils 10 (Ausfall einer Zündrichtung) einen Gleichspannungsanteil aufweist. Dadurch wechselt das Ausgangssignal S_{AN} des UND-Gatters 70 vom low-Pegel auf high-Pegel, wodurch mittels des Ausgangssignals S_{AK} des RS-Flip-Flops 60 und des Leitungsstromes i_{L} ein Zündwinkelsignal S_{αS} generiert wird, das eine Schutzzündung zur Folge hat.

Mittels dieses erfindungsgemäßen Verfahrens und der Vorrichtung zur Durchführung dieses Verfahrens werden Defekte im Ansteuersystem des gesteuerten Serienkondensators erkannt, die, wie oben ausgeführt, zur Folge haben:
- Unsymmetrie,
- Unstetigkeit der Arbeitskennlinie; hunting im Regelbetrieb,
- Überlastung von Ventilkomponenten.

In vielen Fällen zeigen sich dadurch ungünstige Rückwirkungen auf das Netz. Daraus ergibt sich die Notwendigkeit eines Eingriffs gemäß des erfindungsgemäßen Verfahrens. Hierfür gibt es die Möglichkeiten:
- Sperre der Zündung im defekten Zweig; dabei wird eine Impedanz-Unsymmetrie in Kauf genommen,
- Zündsperre in allen Zweigen,
- Aktivieren einer Begrenzungskennlinie in allen Zweigen; es ist dann TCR-Betrieb mit eingeschränktem Steuerbereich ausführbar.

## Patentansprüche

1. Verfahren zur Erkennung von Defekten in einem einen Steuersatz (6) und eine Fußpunktelektronik (8) aufweisenden Ansteuersystem eines gesteuerten Serienkompensators (2), der einen Serienkondensator (18), der in eine Übertragungsleitung (12) seriell integriert ist, und dazu einen Parallelzweig, bestehend aus einer Spule (20) und einem Stromrichterventil (10), aufweist, mit folgenden Verfahrensschritten:
a) Berechnung der aktuellen wirksamen Impedanz (Zᵢ) des gesteuerten Serienkompensators (2) aus einer gemessenen Kondensatorspannung (u_{C}) und einem gemessenen Leitungsstrom (i_{L}),
b) Bestimmung einer Impedanzdifferenz (ΔZ) in Abhängigkeit einer von der Betriebsart des gesteuerten Serienkompensators (2) gewählten Sollimpedanz (Z_{S1},Z_{S2}) und der aktuellen wirksamen Impedanz (Zi), wobei überprüft wird, ob dieser Differenzwert (ΔZ) über eine vorbestimmte Zeitspanne vorhanden ist und/oder ob dieser Differenzwert (ΔZ) einen vorgesehenen Impedanz-Grenzwert (Z_{G}) übersteigt,
c) Generierung eines ersten Zündsperrsignals (S_{IS1}), sobald die ermittelte Impedanzdifferenz (ΔZ) über einer vorherbestimmten Zeitspanne vorhanden und/oder größer als der vorgegebene Impedanz-Grenzwert (Z_{G}) ist und der gemessene Leitungsstrom (i_{L}) kleiner als ein vorgegebener Grenzwert (i_{LG}) ist,
d) Generierung eines Zündwinkelsignals (S_{αS}), sobald die ermittelte Impedanzdifferenz (ΔZ) über einer vorbestimmten Zeitspanne vorhanden und/oder größer als der vorgegebene Impedanz-Grenzwert (Z_{G}) ist und der gemessene Leitungsstrom (i_{L}) größer als ein vorgegebener Grenzwert (i_{LG}) ist, wobei der Wert dieses Zündwinkelsignals (S_{αS}) in Abhängigkeit des gemessenen Leitungsstromes (i_{L}) derart festgelegt wird, daß die Ventilspannung des Stromrichterventils (10) auf eine Ansprechspannung einer Schutzzündvorrichtung hochläuft, wodurch eine Schutzzündung des Stromrichterventils (10) erfolgt, und
e) Generierung eines zweiten Zündsperrsignals (S_{IS2}), sobald die Impedanzdifferenz (ΔZ) über einer vorbestimmten Zeitspanne vorhanden und/oder größer als der vorgegebene Impedanz-Grenzwert (Z_{G}) ist, der gemessene Leitungsstrom (i_{L}) größer als ein vorgegebener Grenzwert (i_{LG}) ist, keine Schutzzündung des Stromrichterventils (10) erfolgte und das generierte Zündwinkelsignal (S_{αS}) über eine vorbestimmte Zeitspanne ansteht.

2. Verfahren nach Anspruch 1, **dadurch gekennzeichnet**, daß ein Zündwinkelsignal (S_{αS}) generiert wird, sobald die gemessene Kondensatorspannung (u_{C}) einen Gleichspannungsanteil aufweist und der Wert des gemessenen Ventilstroms (i_{Th}) des gesteuerten Serienkompensators (2) kleiner gleich einem unteren Grenzwert (i_{ThG}) ist, wobei der Wert des Zündwinkelsignals (S_{αS}) vom Leitungsstrom (i_{L}) derart abhängig ist, daß eine Schutzzündung des Stromrichterventils (10) des gesteuerten Serienkompensators (2) erfolgen kann.

3. Gesteuerter Serienkompensator (2), enthaltend eine Vorrichtung (4) zur Durchführung des Verfahrens nach Anspruch 1, ein einen Steuersatz (6) und eine Fußpunktelektronik (8) enthaltendes Ansteuersystem, einen Serienkondensator (18), der in eine Übertragungsleitung (12) seriell integriert ist, und dazu einen Parallelzweig, bestehend aus einer Spule (20) und einem Stromrichterventil (10), und einen Spannungsteiler (30), der elektrisch parallel zum Serienkondensator (18) geschaltet ist, **dadurch gekennzeichnet**, daß die Vorrichtung (4) eingangsseitig mit der Fußpunktelektronik (8), mit einer Einrichtung (32) zur Erfassung eines Istwertes eines Leitungsstroms (i_{L}), mit einer Einrichtung (34) zur Erfassung eines Istwertes eines Stromes (i_{Th}) durch eine gesteuerte Spule (20) des gesteuerten Serienkompensators (2) und mit einem Ausgang des Spannungsteilers (30) elektrisch leitend verbunden ist, daß dieser Vorrichtung (4) ein vorbestimmter Impedanz-Grenzwert (Z_{G}), ein vorbestimmter Leitungsstrom-Grenzwert (i_{LG}) und ein Mode-Signal (S_{M}) zugeführt wird und daß die Ausgänge, an denen ein Zündwinkelsignal (S_{αS}), ein erstes und ein zweites Zündsperrsignal (S_{IS1},S_{IS2}) anstehen, mit dem Steuersatz (6) des Ansteuersystems des gesteuerten Serienkompensators (2) elektrisch leitend verbunden sind.

4. Gesteuerter Serienkompensator (2) nach Anspruch 3, **dadurch gekennzeichnet**, daß als Vorrichtung (4) ein Mikroprozessor vorgesehen ist.

5. Gesteuerter Serienkompensator (2) nach Anspruch 3, **dadurch gekennzeichnet**, daß die Vorrichtung (4) eingangsseitig eine Signalaufbereitungseinrichtung (32) aufweist, der eine Signalverarbeitungseinrichtung (34) nachgeschaltet ist, deren Ausgänge die Ausgänge der Vorrichtung (4) sind.

6. Gesteuerter Serienkompensator (2) nach Anspruch 5, **dadurch gekennzeichnet,** daß die Signalaufbereitungseinrichtung (32) der Vorrichtung (4) eingangsseitig eine Rechenschaltung (36) zur Berechnung der wirksamen Impedanz (Zᵢ) aus der gemessenen Kondensatorspannung (u_{C}) und des gemessenen Leitungsstromes (i_{L}), einen Umschalter (38), an deren Eingängen die Sollimpedanzen (Z_{S1},Z_{S2}) anstehen und an dessem Steuereingang das Mode-Signal (S_{M}) ansteht, und einen zweiten Komparator (48) aufweist und daß die Ausgänge des Umschalters (38) und der Recheneinheit (36) über einen Vergleicher (40) mit einer Beobachtungsstufe (42) und mit einem ersten Komparator (44) verknüpft sind, wobei die Ausgänge dieser Beobachtungsstufe (42) und des ersten Komparators (44) mit einem ODER-Gatter (46) verbunden sind.

7. Gesteuerter Serienkompensator (2) nach Anspruch 6, **dadurch gekennzeichnet**, daß die Signalaufbereitungseinrichtung (32) der Vorrichtung (4) noch eine Einrichtung (68) zur Feststellung eines Gleichspannungsanteils der Kondensatorspannung (u_{C}) aufweist.

8. Gesteuerter Serienkompensator (2) nach Anspruch 5, **dadurch gekennzeichnet**, daß die Signalverarbreitungseinrichtung (34) der Vorrichtung (4) eingangsseitig ein erstes und zweites UND-Gatter (50,52) und ein NOR-Gatter (54), wobei ein erstes Eingangssignal (S_{OD}) einem ersten Eingang des ersten und zweiten UND-Gatters (50,52) und über einen Inverter (58) einem ersten Eingang des NOR-Gatters (54) und ein zweites Eingangssignal (S_{KI}) einem zweiten Eingang des ersten UND-Gatters (50) und über einen weiteren Inverter (56) einem zweiten Eingang des zweiten UND-Gatters (52) zugeführt sind, und ausgangsseitig einen Kennliniengeber (62) und ein drittes UND-Gatter (66) aufweist, wobei ein erster Eingang des Kennliniengebers (62), an dessen zweiten Eingang ein gemessener Leitungsstrom (i_{L}) ansteht, einerseits über eine weitere Beobachtungsstufe (64) mit einem ersten Eingang des dritten UND-Gatters (66) und andererseits mit einem Ausgang eines RS-Flip-Flops (60) verknüpft ist, dessen Set-Eingang (S) mit dem Ausgang des ersten UND-Gatters (50) verbunden ist und an dessem Reset-Eingang (R) ein Manuell-Signal (S_{MAN}) ansteht, und wobei ein zweiter Eingang des dritten UND-Gatters (66) mit dem Ausgang des NOR-Gatters 54 verknüpft ist, an dessem zweiten Eingang ein Schutzzündsignal (S_{BOD}) ansteht.

9. Gesteuerter Serienkompensator (2) nach Anspruch 5, **dadurch gekennzeichnet**, daß die Signalverarbreitungseinrichtung (34) der Vorrichtung (4) eingangsseitig ein UND-Gatter (70), an dem drei Eingangssignale (S_{OD}, S_{KTh}, S_{DC}) anstehen und ausgangsseitig einen Kennliniengeber (62) aufweist, dessen einer Eingang mit einem Ausgang (Q) eines RS-Flip-Flops (60), dessen Set-Eingang (S) mit dem Ausgang des UND-Gatters (70) verbunden ist und an dessen Reset-Eingang (R) ein Manuell-Signal (S_{MAN}) ansteht, wobei am zweiten Eingang des Kennliniengebers (62) der gemessene Leitungsstrom (i_{L}) ansteht.

## Claims

1. Method for recognising defects in a triggering system of a controlled series compensator (2), which triggering system has a firing-circuit subassembly (6) and a valve-base electronics system (8), the controlled series compensator (2) having a series capacitor (18) integrated in a transmission line (12) in a serial manner as well as a parallel branch consisting of a coil (20) and a current-converter valve (10), the method having the following method steps:
a) calculating the current active impedance (Zᵢ) of the controlled series compensator (2) from a measured capacitor voltage (u_{C}) and a measured conduction current (i_{L}),
b) determining an impedance differential (ΔZ) in dependence upon a setpoint impedance (Z_{S1}, Z_{S2}) selected from the operating mode of the controlled series compensator (2), and upon the current active impedance (Zᵢ), wherein testing takes place to determine whether this differential value (ΔZ) is present for a predetermined time span and/or this differential value (ΔZ) exceeds a specified impedance limiting value (Z_{G}),
c) generating a first firing-pulse blocking signal (S_{IS1}), as soon as the determined impedance differential (ΔZ) has existed for a predetermined time span and/or is greater than the specified impedance limiting value (Z_{G}) and the measured conduction current (i_{L}) is less than a specified limiting value (i_{LG}),
d) generating a firing-angle signal (S_{αS}), as soon as the determined impedance differential (ΔZ) has existed for a predetermined time span and/or is greater than the specified impedance limiting value (Z_{G}), and the measured conduction current (i_{L}) is greater than a specified limiting value (i_{LG}), wherein the value of this firing-angle signal (S_{αS}) is determined in dependence upon the measured conduction current (i_{L}) in such a way that the valve voltage of the current-converter valve (10) runs up to a response voltage of a protective firing device, by which means a protective firing of the current-converter valve (10) is produced, and
e) generating a second firing-pulse blocking signal (S_{IS2}), as soon as the impedance differential (ΔZ) has existed for a predetermined time span and/or is greater than the specified impedance limiting value (Z_{G}), the measured conduction current (i_{L}) is greater than a specified limiting value (i_{LG}), no protective firing of the current-converter valve (10) was taking place and the generated firing-angle signal (S_{αS}) has been present for a predetermined time span.

2. Method according to claim 1, characterised in that a firing-angle signal (S_{αS}) is generated, as soon as the measured capacitor voltage (u_{C}) has a direct voltage component, and the value of the measured valve current (i_{Th}) of the controlled series compensator (2) is less than equal to a lower limiting value (i_{ThG}), wherein the value of the firing-angle signal (S_{αS}) is dependent upon the conduction current (i_{L}) to such an extent that a protective firing of the current-converter valve (10) of the controlled series compensator (2) can take place.

3. Controlled series compensator (2) comprising an apparatus (4) for implementing the method according to claim 1, a triggering system comprising a firing-circuit subassembly (6) and a valve-base electronics system (8), a series capacitor (18) integrated in a serial manner in a transmission line (12), as well as a parallel branch consisting of a coil (20) and a current-converter valve (10), and a potential divider (30) which is electrically connected parallel with the series capacitor (18), characterised in that the apparatus (4) is connected in an electrically conductive manner, on the input side, to the valve-base electronics (8), to a device (32) for detecting an actual value of a conduction current (i_{L}), to a device (34) for detecting an actual value of a current (i_{Th}) through a controlled coil (20) of the controlled series compensator (2), and to an output of the potential divider (30), in that this apparatus (4) is supplied with a predetermined impedance limiting value (Z_{G}), a predetermined conduction current limiting value (i_{LG}) and a mode signal (S_{M}), and in that the outputs at which there are applied a firing-angle signal (S_{αS}), a first and a second firing-pulse blocking signal (S_{IS1}, S_{IS2}), are connected in an electrically conductive manner to the firing-circuit subassembly (6) of the triggering system of the controlled series compensator (2).

4. Controlled series compensator (2) according to claim 3, characterised in that a microprocessor is provided as the apparatus (4).

5. Controlled series compensator (2) according to claim 3, characterised in that the apparatus (4) has, on the input side, a signal-conditioning device (32) to which a signal-conditioning device (34), whose outputs are the outputs of the apparatus (4), is connected downstream.

6. Controlled series compensator (2) according to claim 5, characterised in that the signal-conditioning device (32) of the apparatus (4) has, on the input side, a processor circuit (36) for calculating the active impedance (Zᵢ) from the measured capacitor voltage (u_{C}) and the measured conduction current (i_{L}), and a changeover switch (38) at whose inputs the setpoint impedances (Z_{S1}, Z_{S2}) are applied, and at whose control input the mode signal (S_{M}) is applied, and a second comparator (48), and in that the outputs of the changeover switch (38) and of the processor circuit (36) are linked to an observation stage (42) and to a first comparator (44) by way of a comparator (40), wherein the outputs of this observation stage (42) and of the first comparator (44) are connected to an OR gate (46).

7. Controlled series compensator (2) according to claim 6, characterised in that the signal-conditioning device (32) of the apparatus (4) further comprises a device (68) for determining a direct-voltage component of the capacitor voltage (u_{C}).

8. Controlled series compensator (2) according to claim 5, characterised in that the signal-processing device (34) of the apparatus (4) has, on the input side, a first and a second AND gate (50, 52) and a NOR gate (54), wherein a first input signal (S_{OD}) is fed to a first input of the first and second AND gates (50, 52) and, by way of an inverter (58), to a first input of the NOR gate (54), and a second input signal (S_{KI}) is fed to a second input of the first AND gate (50) and, by way of a further inverter (56), to a second input of the second AND gate (52), and, on the output side, has a function generator (62) and a third AND gate (66), wherein a first input of the function generator (62), at whose second input a measured conduction current (i_{L}) is applied, is linked, on the one hand, by way of a further observation stage (64), to a first input of the third AND gate (66) and, on the other hand, to an output of an RS flip-flop (60) whose set input (S) is connected to the output of the first AND gate (50) and at whose reset input (R) a manual signal (S_{MAN}) is applied, and wherein a second input of the third AND gate (66) is linked to the output of the NOR gate (54), at whose second input a protective-firing signal (S_{BOD}) is applied.

9. Controlled series compensator (2) according to claim 5, characterised in that the signal-processing device (34) of the apparatus (4) has, on the input side, an AND gate (70) at which there are applied three input signals (S_{OD}, S_{KTh}, S_{DC}), and has, on the output side, a function generator (62), one input of which is connected to an output (Q) of an RS flip-flop (60) whose set input (S) is connected to the output of the AND gate (70) and at whose reset input (R) there is applied a manual signal (S_{MAN}), wherein the measured conduction current (i_{L}) is applied at the second input of the function generator (62).

## Revendications

1. Procédé de reconnaissance de défauts dans un système de commande, comportant un élément fixe de commande et un dispositif électronique (8) de base, d'un compensateur (2) série commandé, qui comporte un condensateur série (18), qui est intégré en série à une ligne (12) de transmission, et, en parallèle à ce condensateur série, une branche constituée d'une bobine (20) et d'une valve (10) convertisseuse, comprenant les étapes suivantes :
a) calcul de l'impédance (Zᵢ) active actuelle du compensateur (2) série commandé à partir d'une tension (u_{C}) du condensateur mesurée et d'un courant (i_{L}) de ligne mesuré,
b) détermination d'une différence (ΔZ) d'impédance en fonction d'une impédance (Z_{S1}, Z_{S2}) de consigne choisie par le mode de fonctionnement du compensateur (2) série commandé et de l'impédance (Zᵢ) active actuelle, en vérifiant, si cette valeur (ΔZ) de différence est présente pendant un laps de temps déterminé à l'avance et/ou si cette valeur (ΔZ) de différence est supérieure à une valeur (Z_{G}) limite prévue de l'impédance,
c) génération d'un premier signal (S_{IS1}) de blocage d'amorçage, dès que la différence (ΔZ) déterminée d'impédance est présente pendant un laps de temps déterminé à l'avance et/ou est supérieure à la valeur limite (Z_{G}) prescrite de l'impédance et que le courant (i_{L}) mesuré de ligne est inférieur à une valeur limite (i_{LG}) prescrite,
d) génération d'un signal (S_{αS}) d'angle d'amorçage, dès que la différence (ΔZ) déterminée de l'impédance est présente pendant un laps de temps déterminé à l'avance et/ou est supérieure à la valeur limite (Z_{G}) prescrite de l'impédance et que le courant (i_{L}) mesuré de ligne est plus grand qu'une valeur limite (i_{LG}) prescrite, la valeur de ce signal (S_{αS}) d'angle d'amorçage étant fixée en fonction du courant (i_{L}) de ligne mesuré, de telle sorte que la tension de la valve (10) convertisseuse soit augmentée à une tension de réponse d'un dispositif d'amorçage de protection, ce qui provoque un amorçage de protection de la valve (10) convertisseuse, et
e) génération d'un deuxième signal (S_{IS2}) de blocage d'amorçage, dès que la différence (ΔZ) d'impédance est présente pendant un laps de temps déterminé à l'avance et/ou est supérieure à la valeur limite (Z_{G}) prescrite de l'impédance, que le courant mesuré (i_{L}) de ligne est supérieur à une valeur limite (i_{LG}) prescrite, qu'aucun amorçage de protection de la valve (10) convertisseuse ne s'est produit et que le signal généré (S_{αS}) d'angle d'amorçage est présent pendant un laps de temps déterminé à l'avance.

2. Procédé suivant la revendication 1, caractérisé en ce que l'on génère un signal (S_{αS}) d'angle d'amorçage, dès que la tension (u_{C}) mesurée du condensateur comporte une composante continue de tension et que la valeur du courant (i_{Th}) mesuré de valve du compensateur (2) série commandé est inférieure ou égale à une valeur limite basse (i_{ThG}), la valeur du signal (S_{αS}) d'angle d'amorçage dépendant du courant (i_{L}) de ligne, de telle sorte qu'un amorçage de protection de la valve (10) convertisseuse du compensateur (2) série commandé puisse s'effectuer.

3. Compensateur (2) série commandé, contenant un dispositif (4) de mise en oeuvre du procédé suivant la revendication 1, un système de commande comportant un élément (6) de commande et un dispositif (8) électronique de base, un condensateur (18) série, qui est intégré en série à une ligne (12) de transmission, et, en parallèle à ce condensateur, une branche constituée d'une bobine (20) et d'une valve (10) convertisseuse, et un diviseur (30) de tension, qui est branché électriquement en parallèle au condensateur (18) série, caractérisé en ce que le dispositif (4) est relié de façon conductrice de l'électricité, du côté entrée, au dispositif (8) électronique de base, à un dispositif (32) de détection d'une valeur réelle d'un courant (i_{L}) de ligne, à un dispositif (34) de détection d'une valeur réelle d'un courant (i_{Th}) par une bobine (20) commandée du compensateur (2) série commandé et à une sortie du diviseur (30) de tension, une valeur limite (Z_{G}) déterminée à l'avance de l'impédance, une valeur limite (i_{LG}) déterminée à l'avance du courant de ligne et un signal (S_{M}) de mode sont envoyés à ce dispositif (4) et les sorties, sur lesquelles un signal (S_{αS}) d'angle d'amorçage, un premier et un deuxième signal (S_{IS1}, S_{IS2}) de blocage d'amorçage sont disponibles, sont reliées d'une façon conductrice de l'électricité à l'élément (6) de commande du système de commande du compensateur (2) série commandé.

4. Compensateur (2) série commandé suivant la revendication 3, caractérisé en ce qu'il est prévu comme dispositif (4) un microprocesseur.

5. Compensateur (2) série commandé suivant la revendication 3, caractérisé en ce que le dispositif (4) comporte, côté entrée, un dispositif (32) de préparation de signaux, en aval duquel un dispositif (34) de traitement des signaux, dont les sorties sont les sorties du dispositif (4), est branché.

6. Compensateur (2) série commandé suivant la revendication 5, caractérisé en ce que le dispositif (32) de préparation de signaux du dispositif (4) comporte du côté entrée un circuit (36) de calcul de l'impédance (Zᵢ) active à partir de la tension (u_{C}) mesurée du condensateur et du courant (i_{L}) mesuré de la ligne, un commutateur (38), aux entrées duquel les impédances (Z_{S1}, Z_{S2}) de consigne sont appliquées et à la sortie de commande duquel le signal (S_{M}) de mode est présent, et un deuxième comparateur (48) et les sorties du commutateur (38) et de l'unité (36) de calcul sont combinées par l'intermédiaire d'un comparateur (40) à un étage (42) d'observation et à un premier comparateur (44), les sorties de cet étage (42) d'observation et du premier comparateur (44) étant reliées à une porte (46) ET.

7. Compensateur (2) série commandé suivant la revendication 6, caractérisé en ce que le dispositif (32) de préparation de signaux du dispositif (4) comporte en outre un dispositif (68) de détection d'une composante continue de la tension (u_{C}) du condensateur.

8. Compensateur (2) série commandé suivant la revendication 5, caractérisé en ce que le dispositif (34) de traitement de signaux du dispositif (4) comporte du côté entrée des première et seconde portes (50,52) ET et une porte (54) NON-OU, un premier signal (S_{OD}) d'entrée étant envoyé à une première entrée des première et deuxième portes (50, 52) ET et par l'intermédiaire d'un inverseur (58) à une première entrée de la porte (54) NON-OU et un deuxième signal (S_{KI}) d'entrée étant envoyé à une deuxième entrée de la première porte (50) ET et par l'intermédiaire d'un autre inverseur (56) à une deuxième entrée de la deuxième porte (52) ET, et le dispositif (34) de traitement des signaux du dispositif (4) comporte du côté sortie un générateur (62) de caractéristiques et une troisième porte (66) ET, une première entrée du générateur (62) de caractéristiques, à la deuxième entrée duquel un courant (i_{L}) mesuré de ligne est appliqué, étant combinée d'une part par l'intermédiaire d'un autre étage (64) d'observation avec une première entrée de la troisième porte (66) ET et d'autre part, avec une sortie d'une bascule bistable RS (60), dont l'entrée (R) de positionnement est reliée à la sortie de la première porte (50) ET et à l'entrée (R) de remise à l'état initial duquel un signal (S_{MAN}) manuel est appliqué, et une deuxième entrée de la troisième porte (66) ET étant combinée avec la sortie de la porte (54) NON-OU, à la deuxième entrée de laquelle un signal (S_{BOD}) d'amorçage de protection est appliqué.

9. Compensateur (2) série commandé suivant la revendication 5, caractérisé en ce que le dispositif (34) de traitement des signaux du dispositif (4) comporte du côté entrée une porte (70) ET, à laquelle trois signaux (S_{OD}, S_{KTh}, S_{DC}) d'entrée sont appliqués, et du côté sortie, un générateur (62) de caractéristiques, dont une entrée est reliée à une sortie (Q) d'une bascule bistable RS (60), dont l'entrée (S) de positionnement est reliée à la sortie de la porte (70) ET et à l'entrée (R) de remise à l'état initial de laquelle un signal (S_{MAN}) manuel est appliqué, le courant (i_{L}) mesuré de ligne étant appliqué à la deuxième entrée du générateur (62) de caractéristiques.
